Europäisches Patentamt

European Patent Office

Office européen des brevets

(11) Numéro de publication : **0 467 786 B1**

(19)

(12)

# FASCICULE DE BREVET EUROPEEN

(45) Date de publication du fascicule du brevet :
**20.09.95 Bulletin 95/38**

(51) Int. Cl.⁶ : **G21D 3/04, G21D 3/10**

(21) Numéro de dépôt : **91402000.3**

(22) Date de dépôt : **17.07.91**

(54) **Procédé et dispositif de protection d'un réacteur nucléaire.**

(30) Priorité : **17.07.90 FR 9009095**

(43) Date de publication de la demande :
**22.01.92 Bulletin 92/04**

(45) Mention de la délivrance du brevet :
**20.09.95 Bulletin 95/38**

(84) Etats contractants désignés :
**BE CH LI**

(56) Documents cités :
**EP-A- 0 212 525
GB-A- 2 040 522
US-A- 3 997 767
US-A- 4 337 118**

(73) Titulaire : **FRAMATOME
Tour Fiat
1, Place de la Coupole
F-92400 Courbevoie (FR)**

(72) Inventeur : **Mourlevat, Jean-Lucien
16, rue Rémi Billeau
F-78590 Noisy le Roi (FR)**
Inventeur : **Montanari, Gérard
15, rue Camille Pelletan
F-78800 Houilles (FR)**
Inventeur : **Kockerols, Pierre FRAMATOME
Tour Fiat- Cédex 16
JT 1039 A
F-92084 Paris la Défense (FR)**

(74) Mandataire : **Bourely, Paul et al
SOSPI
14-16, rue de la Baume
F-75008 Paris (FR)**

## Description

La présente invention concerne la protection des réacteurs nucléaires, c'est-à-dire la commande de tels réacteurs dans le but de leur faire fournir à tout instant la puissance qui est nécessaire pour satisfaire des besoins variables, tout en évitant autant que possible d'une part toute usure non nécessaire du combustible, d'autre part, tout risque d'accident. Des critères de sûreté très stricts sont notamment définis pour limiter de tels risques en ce qui concerne les chaudières constituées par ces réacteurs.

Cette invention concerne plus particulièrement les chaudières nucléaires à eau pressurisée.

On sait que, dans une centrale comportant une telle chaudière, il est nécessaire d'exercer un contrôle strict de la distribution spatiale de la puissance dans le coeur du réacteur. Ce contrôle permet de s'assurer qu'en fonctionnement normal ou au cours de transitoires accidentels les critères de sûreté de la chaudière sont respectés.

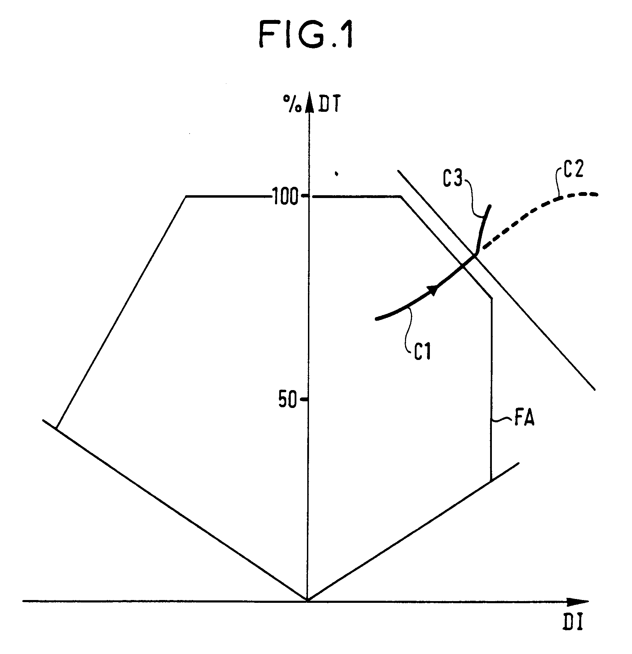

Ainsi un domaine de fonctionnement autorisé du coeur est défini par un réseau de droites limites dans un plan (voir Fig 1) dans lequel les coordonnées sont la puissance nucléaire et une différence axiale de puissance. Ce dernier paramètre, noté ci-après, DI, est défini comme la différence entre la puissance $P_H$ mesurée dans le haut du coeur et celle PB dans le bas du coeur.

$$DI = P_H - P_B$$

Il est représentatif de la distribution axiale de la puissance dans le coeur.

Le maintien du point de fonctionnement du coeur à l'intérieur de ce domaine permet, entre autres, de respecter les critères de sûreté en cas d'accident de perte de réfrigérant primaire.

Par ailleurs, afin d'éviter des variations trop importantes de la température du fluide caloporteur primaire qui refroidit le coeur, un programme de température de référence en fonction du niveau de puissance est défini. Lors d'un écart entre la température mesurée et la température de référence, un système de régulation peut actionner automatiquement les grappes de contrôle du coeur de manière à corriger cet écart. Lorsque ce système de régulation de la température est effectif, on dit que les grappes sont en mode automatique. Un transitoire de refroidissement provoque une extraction, un transitoire de réchauffement une insertion des grappes.

Un problème se pose à propos de cette régulation :

Au cours de certains transitoires accidentels provoquant un refroidissement brutal du fluide primaire, le système de régulation de la température provoque une remontée rapide des grappes de contrôle, si celles-ci sont en mode automatique. Cette extraction brutale de grappes absorbantes a deux conséquences qui sont représentées dans un cas particulier par la succession des segments de courbe C1 (en trait plein) et C2 (en trait tireté) sur la Fig 1 :

- D'une part, elle apporte de la réactivité au coeur, entraînant une montée de la puissance nucléaire DT qui est représentée en ordonnées sur cette figure.
- D'autre part, elle tend à provoquer une remontée de la distribution de puissance vers le haut du coeur et donc un accroissement de la différence axiale de puissance DI qui est représentée en abscisses. Sur cette figure, le domaine de fonctionnement autorisé est représenté par sa limite extérieure FA qui est constituée de segments de droites.

Dans le cas d'une situation pré-accidentelle du coeur représentée par un point situé à droite de ce domaine de fonctionnement, l'excursion de la puissance nucléaire et de la différence axiale de puissance peut entraîner une sortie importante du point de fonctionnement hors de ce domaine. L'évolution caractéristique d'un tel transitoire de refroidissement est représentée par les segments C1 et C2. Une analyse détaillée de ce type de transitoire a montré que les limites de sûreté du coeur sont approchées voire même dépassées, sans que l'intervention d'un des systèmes de protection du réacteur puisse toujours être garantie.

La présente invention a notamment pour but de limiter les risques qui peuvent résulter d'une sortie incontrôlée du point de fonctionnement du réacteur hors dudit domaine de fonctionnement lorsque cette sortie est liée à un mouvement d'extraction rapide du groupe de grappes de régulation de température.

Dans ce but elle a notamment pour objet un procédé de protection d'un réacteur nucléaire muni d'un système de commande de puissance agissant sur certaines grappes de contrôle pour rapprocher une puissance fournie par ce réacteur d'une puissance demandée à ce réacteur, ce réacteur étant muni en outre d'un système de régulation de température agissant sur certaines grappes de contrôle d'une manière distincte du système de commande de puissance pour rapprocher une température de fonctionnement régnant dans ce réacteur d'une température de référence, ce procédé étant caractérisé par le fait qu'il comporte les étapes suivantes :

- une puissance composite est définie et combine d'une part une puissance nucléaire totale dégagée dans le coeur de ce réacteur, d'autre part une différence axiale de puissance nucléaire apparaissant entre un haut et un bas du coeur de ce réacteur, cette combinaison étant telle que cette puissance composite croît avec la puissance nucléaire totale et avec la valeur absolue de la différence axiale,
- et ledit système de régulation de température cesse d'agir lorsque la puissance composite dépasse un seuil de blocage prédéterminé.

La cessation de l'action du système de régulation de température est typiquement obtenue par la création d'un signal de blocage qui bloque les ordres d'extraction du groupe de régulation de température lorsque le point de fonctionnement du réacteur sort d'une manière dangereuse d'un domaine de fonctionnement prédéterminé. La frontière de ce domaine qui peut être franchie de cette manière est définie par une valeur de la puissance composite définie ci-dessus, cette valeur étant constituée par le seuil de blocage mentionné ci-dessus. La sortie dangereuse considérée est, dans le cas des réacteurs habituels, et en se référant à la Fig 1, une sortie à droite.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs.

La figure 1 a déjà été partiellement décrite et représente des diagrammes de variations de la puissance nucléaire en ordonnées en onction de la différence axiale de puissance en abscisses.

La figure 2 représente une vue d'ensemble d'un réacteur comportant un dispositif selon la présente invention.

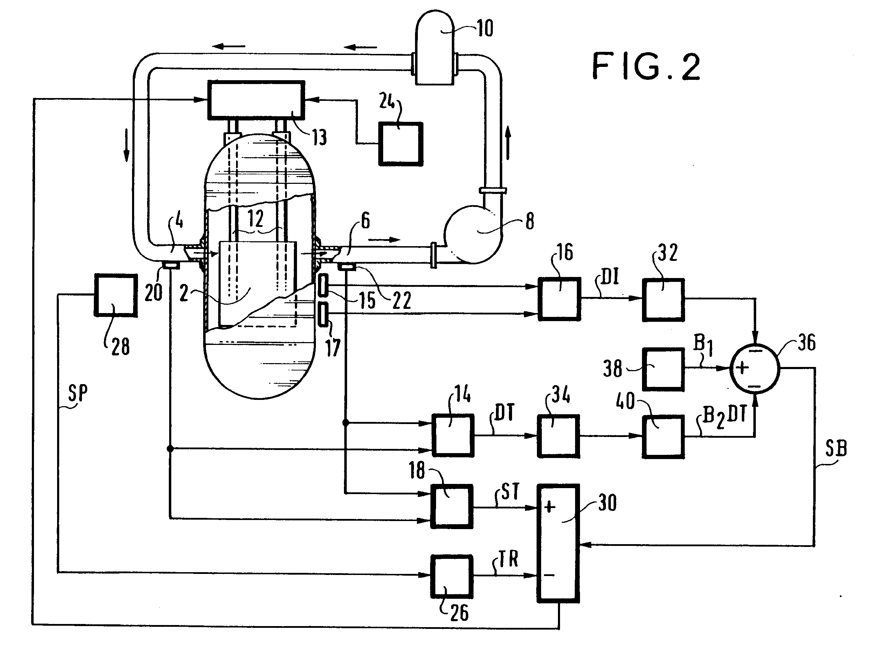

La présente invention s'applique de manière générale à un réacteur comportant, conformément à la Fig 2, les éléments suivants :

Un coeur 2 contenant des éléments combustibles qui sont le siège d'une réaction nucléaire dégageant une puissance nucléaire qui est répartie entre un haut et un bas de ce coeur et qui se transforme en chaleur.

- Un circuit caloporteur 4, 6, 8 pour faire entrer un fluide caloporteur dans ce coeur par une tubulure d'entrée 4, pour le faire circuler dans ce coeur sous l'action d'une pompe primaire 8 et pour le faire sortir par une tubulure de sortie 6, de manière à en évacuer ladite chaleur. Ce circuit fournit cette chaleur à un récepteur thermique extérieur 10 à besoins variables, qui est classiquement constitué par un générateur de vapeur 10 transférant la puissance à un circuit secondaire.
- Des grappes de contrôle 12 mues par des mécanismes 13 pour pénétrer sur commande dans ce coeur à partir du haut afin d'y commander la réaction nucléaire.
- Au moins un système de mesure de puissance 14 pour fournir un signal de puissance totale DT représentatif de la puissance nucléaire. Ce système fait la différence des températures mesurées par deux détecteurs thermiques 20 et 22 placés sur les tubulures d'entrée 4 et de sortie 6.
- Un système de mesure de différence de puissance 16 pour fournir un signal de différence de puissance DI représentatif d'une différence axiale de puissance nucléaire entre le haut et le bas de ce coeur. Ce système est alimenté par deux détecteurs neutroniques 15 et 17 placés en regard du haut et du bas du coeur 2.

- Un système de mesure de température 18 pour fournir un signal de température de fonctionnement représentatif d'une température de fonctionnement qui est une température dudit fluide de refroidissement. Ce système fait la moyenne des températures mesurées par les détecteurs 20 et 22.

Le dispositif de pilotage de ce réacteur comporte notamment, comme connu,

- un système de commande de puissance 24 agissant sur certaines des grappes de contrôle 12 en fonction notamment des variations des besoins du récepteur thermique 10 pour que ce récepteur recoive une puissance thermique correspondant, au moins approximativement, à ces besoins,
- un circuit de définition de température de référence recevant un signal de puissance SP représentatif de la puissance nucléaire et fourni par un détecteur 28, ce circuit élaborant un signal de référence de température TR représentatif d'une température de référence qui dépend de la puissance nucléaire et qui est tel que le réacteur fonctionne dans des conditions optimales lorsque, pour chaque valeur de la puissance nucléaire, la température de fonctionnement est égale à la température de référence,
- et un système de régulation de température 30 recevant les signaux de température de fonctionnement ST et de référence de température TR et agissant sur un groupe de régulation de température constitué par certaines des grappes de contrôle 12, d'une manière distincte du système de commande de puissance 24, pour au moins limiter l'écart entre les températures de fonctionnement et de référence.

Conformément à la présente invention ce dispositif comporte en outre un système de blocage de régulation de température 36 recevant les signaux de puissance totale DT et de différence de puissance DI et les introduisant dans une combinaison qui définit à partir de ces signaux, une puissance composite, ce système de blocage de régulation de température bloquant le système de régulation de température 30 lorsque cette puissance composite dépasse un seuil de blocage prédéterminé. Ce seuil $B_1$ est fourni symboliquement sur la Fig 2 par un générateur 38.

De préférence le circuit de blocage comporte un multiplicateur 40 pour multiplier l'un au moins des signaux de puissance totale DT et de différence de puissance DI par un coefficient positif $B_2$ de manière à réaliser une combinaison linéaire à coefficients positifs $DT + B_2 \, DI$.

De préférence on effectue un traitement de filtrage sur l'un au moins de ces signaux, la puissance composite étant définie après ce traitement.

Ce traitement est réalisé par des circuits 32, 34 ayant des fonctions de transfert du type $(1 + T_2p)/(1 + T_1p)$ en ce qui concerne ledit signal de différence de puissance DI et du type $1/(1 + T_3p)$ en ce qui concerne ledit signal de puissance totale DT, $T_1$, $T_2$ et $T_3$ étant des constantes de temps qui sont propres au réacteur nucléaire qu'il s'agit de piloter, de même que les coefficients tels que $B_2$ et le seuil de blocage $B_1$.

Sur la figure 1, la puissance nucléaire correspondant au seuil de blocage est représentée par une droite ayant comme équation:

$$DT = B_1 - B_2 \, DI$$

L'évolution du transitoire de refroidissement précédemment mentionné est, grâce à la mise en oeuvre de la présente invention, celle qui est représentée par la succession des segments C1 et C3.

Pour la réalisation pratique de l'invention la puissance nucléaire est représentée comme indiqué ci-dessus par la différence mesurée DT entre la température de la tubulure de sortie chaude 6 et la température de la tubulure d'entrée froide 4. Un signal de blocage SB (voir Fig 2) est généré lorsque cette puissance dépasse, après filtrage, une valeur limite définie à partir du signal DI filtré en 32. Le dépassement est défini de la façon suivante :

$$\frac{1}{1 + T_3p} DT \text{ supérieur ou égal à } B1 - B2 \frac{1 + T_1p}{1 + T_2p} DI$$

Les fractions désignent les fonctions de transfert et représentent symboliquement l'intervention des circuits de filtrage 34 et 32, respectivement.

Le filtre avance-retard 32 pourrait anticiper l'évolution du signal DI. Le filtre 34 élimine les bruits de mesure du signal DT. Les valeurs de consigne $B_1$ et $B_2$ et les constantes de temps $T_1$ à $T_3$ sont à optimiser en fonction du modèle de chaudière et du domaine de fonctionnement autorisé.

De façon générale, la conception de cet ordre de blocage est de préférence telle que même en cas de défaillance unique sur n'importe quelle partie du dispositif, l'ordre de blocage soit effectivement executé grâce à une chaîne redondante. De plus, afin d'éviter des blocages intempestifs, l'ordre effectif de blocage est de préférence un ordre secondaire émis en sortie d'une logique en 2 sur n, n étant un nombre de chaînes parallèles de génération de signaux primaires de blocage.

Des premières simulations du fonctionnement du dispositif décrit ci-dessus en cas d'accidents de refroidissement ont montré que la protection est assuré de manière satisfaisante. Elle permet de dégager des marges non négligeables par rapport aux critères de sûreté du coeur.

Ces marges peuvent être mises à profit pour la gestion du combustible et ainsi faciliter la définition des plans de chargement.

## Revendications

1. Procédé de protection d'un réacteur nucléaire muni d'un système (24) de commande de puissance agissant sur certaines grappes de contrôle pour rapprocher une puissance fournie par ce réacteur d'une puissance demandée à ce réacteur, ce réacteur étant muni en outre d'un système de régulation de température (30) agissant sur certaines grappes de contrôle d'une manière distincte du système (24) de commande de puissance pour rapprocher une température de fonctionnement régnant dans ce réacteur d'une température de référence, ce procédé étant caractérisé par le fait qu'il comporte les étapes suivantes :
   - une puissance composite est définie et combine d'une part une puissance nucléaire totale (DT) dégagée dans le coeur (2) de ce réacteur, d'autre part une différence axiale de puissance nucléaire (DI) apparaissant entre un haut et un bas du coeur de ce réacteur, cette combinaison étant telle que cette puissance composite croît avec la puissance nucléaire totale et avec la valeur absolue de la différence axiale,
   - et ledit système de régulation de température (30) cesse d'agir lorsque la puissance composite dépasse un seuil de blocage ($B_1$) prédéterminé.

2. Procédé selon la revendication 1 caractérisé par le fait que ledit signal de puissance composite est une combinaison linéaire à coefficients positifs desdits signaux de puissance totale (DT) et de différence de puissance (DI), ces coefficients et ledit seuil de blocage étant propres audit réacteur nucléaire.

3. Procédé selon la revendication 2 caractérisé par le fait qu'un traitement de filtrage est effectué sur l'un au moins desdits signaux de puissance totale (DT) et de différence de puissance (DI), ladite combinaison étant réalisée après ce traitement.

4. Procédé selon la revendication 4 caractérisé par le fait que ledit traitement de filtrage est réalisé par des circuits (32, 34) ayant des fonctions de transfert du type $(1 + T_2p)/(1 + T_1p)$ en ce qui concerne ledit signal de différence de puissance (DI) et du type $1/(1 + T_3p)$ en ce qui concerne ledit signal de puissance totale (DT), $T_1$ et $T_2$ et $T_3$ étant des constantes de temps propres audit réacteur nucléaire.

5. Procédé selon la revendication 2 caractérisé par le fait que ledit signal de puissance totale (DT) est représentatif d'une élévation de la température dudit fluide caloporteur de ladite tubulure d'entrée (4) à ladite tubulure de sortie (6).

6. Dispositif de pilotage d'un réacteur nucléaire, ce réacteur comportant :

- un coeur (2) contenant des éléments combustibles qui sont le siège d'une réaction nucléaire dégageant une puissance nucléaire qui est répartie entre un haut et un bas de ce coeur et qui se transforme en chaleur,
- un circuit caloporteur (4,6,8) tel qu'un fluide caloporteur entre dans le coeur par une tubulure d'entrée (4), circule dans le coeur et sort par une tubulure de sortie (6), de manière à évacuer ladite chaleur, ce circuit fournissant de la chaleur à un récepteur thermique extérieur (10) à besoins variables,
- des grappes de contrôle (12) pénétrant sur commande dans le coeur à partir du haut pour y commander ladite réaction nucléaire,
- au moins un système de mesure de puissance (14) pour fournir un signal de puissance totale (DT) représentatif de ladite puissance nucléaire,
- un système de mesure de différence de puissance (16) pour fournir un signal de différence de puissance (DI) représentatif d'une différence axiale de puissance nucléaire entre ledit haut et ledit bas de ce coeur,
- un système de mesure de température (18) pour fournir un signal de température de fonctionnement représentatif d'une température de fonctionnement qui est une température dudit fluide de refroidissement,
- un système de commande de puissance (24) agissant sur certaines desdites grappes de contrôle (12), en fonction notamment des variations des besoins dudit récepteur thermique (10) pour que ce récepteur reçoive une puissance thermique correspondant, au moins approximativement, à ces besoins,
- un circuit (26) de définition de température de référence recevant un signal de puissance (SP) représentatif de ladite puissance nucléaire totale (DT), et élaborant un signal de référence de température (TR) représentatif d'une température de référence qui dépend de ladite puissance nucléaire et qui est tel que ledit réacteur fonctionne dans des conditions optimales lorsque, pour chaque valeur de ladite puissance nucléaire totale (DT), ladite température de fonctionnement est égale à ladite température de référence,
- et un système de régulation de température (30) recevant lesdits signaux de température de fonctionnement (ST) et de référence de température (TR) et agissant sur un groupe de régulation de température constitué par certaines desdites grappes de contrôle (12), d'une manière distincte dudit système de commande de puissance (24) pour au moins limiter l'écart entre lesdites températures de fonctionnement et de référence,

ce dispositif étant caractérisé par le fait qu'il comporte en outre un système de blocage de régulation de température (36) recevant lesdits signaux de puissance totale (DT) et de différence axiale de puissance (DI) et réalisant à partir de ces signaux, une combinaison définissant une puissance composite, ce système de blocage de régulation de température bloquant ledit système de régulation de température (30) lorsque cette puissance composite dépasse un seuil de blocage prédéterminé ($B_1$).

7. Dispositif selon la revendication 6 caractérisé par le fait que ledit circuit de blocage comporte des moyens (40) pour multiplier l'un au moins desdits signaux de puissance totale (DT) et de différence de puissance (DI) par un coefficient positif ($B_2$) de manière à réaliser une combinaison linéaire à coefficients positifs ($DT + B_2\, DI$).

**Claims**

1. A method of protecting a nuclear reactor provided with a power control system (24) acting on certain control clusters in order to bring the power delivered by said reactor closer to the power demanded of said reactor, said reactor being further provided with a temperature regulation system (30) acting on certain control clusters in a manner which is distinct from the power control system (24) in order to bring the operating temperature prevailing in said reactor closer to a reference temperature, said method being characterized by the fact that it includes the following steps:

a composite power is defined and combines firstly a total nuclear power (DT) given off in the core (2) of said reactor, and secondly an axial nuclear power difference (DI) appearing between the top and the bottom of the core of said reactor, said combination being such that said composite power increases with the total nuclear power and with the absolute value of the axial difference; and

said temperature regulation system (30) ceases to act whenever the composite power exceeds a predetermined inhibit threshold (B1).

2. A method according to claim 1, characterized by the fact that said composite power signal is a linear combination having positive coefficients of said total power signal (DT) and of said power difference signal (DI), said coefficients and said inhibit threshold being specific to said nuclear reactor.

3. A method according to claim 2, characterized by the fact that filtering is performed on at least one of said total power signal (DT) and said power difference signal (DI), said combination being performed after said filtering.

4. A method according to claim 4, characterized by the fact that said filtering is performed by circuits (32, 34) having transfer functions of the type $(1 + T_2p)/(1 + T_1p)$ for said power difference signal (DI) and of the type $1/(1 + T_3p)$ for said total power signal (DT), where $T_1$, $T_2$, and $T_3$ are time constants specific to said nuclear reactor.

5. A method according to claim 2, characterized by the fact that said total power signal (DT) is representative of the rise in temperature of said heat exchange fluid from said inlet duct (4) to said outlet duct (6).

6. Apparatus for controlling a nuclear reactor, the reactor comprising:

a core (2) containing fuel rods in which nuclear reaction takes place, giving off nuclear power which is distributed between the top and the bottom of the core and which is transformed into heat;

a heat exchange circuit (4, 6, 8) such that a heat exchange fluid penetrates into the core via an inlet duct (4), circulates through the core, and leaves via an outlet duct (6), thereby removing said heat, said circuit providing heat to an external heat receiver (10) having varying requirements;

control clusters (12) penetrating in controlled manner into the core from the top thereof in order to control said nuclear reaction therein;

at least one power measuring system (14) for providing a total power signal (DT) representative of said nuclear power;

a power difference measuring system (16) for providing a power difference signal (DI) representative of an axial difference in nuclear power between said top and said bottom of the core;

a temperature measurement system (18) for providing an operating temperature signal (ST) representative of an operating temperature which is a temperature of said heat exchange fluid;

a power control system (24) acting on some of said control clusters (12) as a function in particular of varying needs of said heat receiver (10) so that said receiver receives heat power which corresponds, at least approximately, to its needs;

a reference temperature defining circuit (26) receiving a power signal (ST) representative of said total nuclear power (DT), and generating a temperature reference signal (TR) representative of a reference temperature which depends on said nuclear power and which is such that said reactor operates under optimum conditions when said operating temperature is equal to said reference temperature at each value of said total nuclear power (DT); and

a temperature regulation system (30) receiving said operating temperature (ST) and said temperature reference signal (TR) and acting on a temperature regulation group constituted by some of said control clusters (12) in a manner which is different from said power control system (24) for the purpose of at least limiting the difference between said operating temperature and said reference temperature;

said apparatus being characterized by the fact that it further includes a temperature regulation inhibit system (36) receiving said total power signal (DT) and said axial power difference signal (DI) and deriving a combination of these signals defining a composite power, said temperature regulation inhibit system inhibiting said temperature regulation system (30) when said composite power exceeds a predetermined inhibit threshold (B_1).

7. Apparatus according to claim 6, characterized by the fact that said inhibit circuit includes means (40) for multiplying at least one of said total power signal (DT) and said power difference signal (DI) by a positive coefficient (B_2) so as to perform a linear combination having positive coefficients (DT + B_2.DI).

**Patentansprüche**

1. Verfahren zum Schutz eines Kernreaktors, der ein auf bestimmte Kontrollstabbündel einwirkendes Leistungssteuersystem (24) enthält, um die von diesem Reaktor gelieferte Leistung an die Lastbedingungen anzunähern, wobei der Reaktor weiter ein auf gewisse Kontrollstäbe getrennt vom Leistungssteuersystem (24) einwirkendes Temperaturregelsystem (30) aufweist, um die in diesem Reaktor herrschende Betriebstemperatur an eine Bezugstemperatur anzunähern, dadurch gekennzeichnet, daß das Verfahren die folgenden Schritte aufweist:

- eine "kombinierte" Leistung wird definiert, die eine nukleare Gesamtleistung (DT), die im Kern (2) des Reaktors freigesetzt wird, mit einem Unterschied (DI) der Leistung in axialer Richtung zwischen dem oberen und dem unteren Bereich dieses Reaktors verknüpft, wobei diese Verknüpfung so gewählt ist, daß die kombinierte Leistung mit der nuklearen Gesamtleistung und mit dem Absolutwert des axialen Leistungsunterschieds zunimmt,
- das Temperaturregelsystem (30) wird in seiner Wirkung blockiert, sobald die kombinierte Leistung einen vorgegebenen Blockierschwellwert (B₁) überschreitet.

2. Verfahren nach Anspruch 1, dadurch gekennzeichnet, daß das kombinierte Leistungssignal eine lineare Kombination des Gesamtleistungssignals (DT) und des Leistungsunterschiedsignals (DI) mit linearen Koeffizienten ist und daß diese Koeffizienten und die Blockierschwelle für den jeweiligen Kernreaktor typisch sind.

3. Verfahren nach Anspruch 2, dadurch gekennzeichnet, daß mindestens eines der Signale betreffend die Gesamtleistung (DT) und den Leistungsunterschied (DI) gefiltert wird und daß die Signale nach dieser Filterung kombiniert werden.

4. Verfahren nach Anspruch 3, dadurch gekennzeichnet, daß die Filterung in Schaltungen (32, 34) mit Transferfunktionen des Typs $(1+T_2p)/(1+T_1p)$ hinsichtlich des Leistungsunterschiedsignals (DI) und mit Transferfunktionen des Typs $1/(1+T_3p)$ hinsichtlich des Gesamtleistungssignals (DT) erfolgt, wobei $T_1$, $T_2$ und $T_3$ für den Kernreaktor typische Zeitkonstanten sind.

5. Verfahren nach Anspruch 2, dadurch gekennzeichnet, daß das Gesamtleistungssignal (DT) für eine Erhöhung der Temperatur des Wärmeträgerfluids zwischen der Eingangsleitung (4) und der Ausgangsleitung (6) repräsentativ ist.

6. Steuervorrichtung für einen Kernreaktor, der aufweist:

- einen Kern (2) mit den Brennelementen, in denen eine die nukleare Leistung freisetzende Kernreaktion stattfindet, wobei diese Leistung zwischen dem oberen und dem unteren Ende des Kerns verteilt ist und sich in Wärme verwandelt,

- einen Kühlkreislauf (4, 6, 8), bei dem ein Wärmeträgerfluid über eine Eingangsleitung (4) in den Kern eingespeist wird, im Kern unter der Wirkung einer Primärpumpe (8) umläuft und über eine Ausgangsleitung (6) den Kern verläßt, so daß die Wärme abgeführt und an einen äußeren Wärmeempfänger (10) variabler Belastung geliefert wird,
- Kontrollstabbündel (12), die gesteuert in den Kern von oben eindringen, um dort die Kernreaktion zu steuern,
- mindestens ein Leistungsmeßsystem (14), das ein für die nukleare Leistung repräsentatives Gesamtleistungssignal (DT) liefert,
- ein System (16) zur Messung des Leistungsunterschieds, das ein Leistungsunterschiedsignal (DI) liefert, welches für den axialen Unterschied der nuklearen Leistung zwischen dem oberen und dem unteren Ende des Kerns repräsentativ ist,
- ein Temperaturmeßsystem (18), das ein für die Betriebstemperatur, d.h. die Temperatur des Kühlfluids, charakteristisches Signal liefert,
- ein Leistungssteuersystem (24), das auf manche der Kontrollstabbündel (12) insbesondere abhängig von den Veränderungen der Lastanforderungen des Wärmeempfängers (10) einwirkt, so daß der Wärmeempfänger zumindest angenähert eine den Anforderungen entsprechende Wärmeleistung empfängt,
- eine Schaltung (26) zur Definition der Bezugstemperatur, die ein für die nukleare Gesamtleistung (DT) repräsentatives Leistungssignal (SP) empfängt und ein Bezugstemperatursignal (TR) liefert, das für eine Bezugstemperatur repräsentativ ist, welche von der nuklearen Leistung abhängt und so bestimmt ist, daß der Reaktor unter optimalen Bedingungen betrieben wird, wenn für jeden Wert der nuklearen Gesamtleistung (DT) die Betriebstemperatur der Bezugstemperatur gleicht,
- und ein Temperaturregelsystem (30), das das Betriebstemperatursignal (ST) und das Bezugstemperatursignal (TR) empfängt und auf eine Temperaturregelgruppe einwirkt, die aus bestimmten, vom Leistungssteuersystem (24) unterschiedlichen Kontrollstäben (12) besteht, um den Abstand zwischen der Betriebstemperatur und der Bezugstemperatur zumindest in Grenzen zu halten, dadurch gekennzeichnet, daß die Vorrichtung außerdem ein System (36) zur Blockierung der Temperaturregelung aufweist, das das Gesamtleistungssignal (DT) und das Leistungsunterschiedssignal (DI) empfängt und sie so verknüpft, daß ausgehend von diesen Signalen eine kombinierte Leistung definiert wird, wobei dieses System zur Blockierung der Temperaturregelung das Temperaturregelsystem (30) blockiert, wenn diese kombinierte Leistung eine vorgegebene Blockierschwelle ($B_1$) überschreitet.

7. Vorrichtung nach Anspruch 6, dadurch gekennzeichnet, daß das Blockiersystem Mittel (40) enthält, die das Gesamtleistungssignal (DT) oder das Leistungsunterschiedsignal (DI) oder beide je mit einem positiven Koeffizienten ($B_2$) multiplizieren, so daß sich eine lineare Kombination (DT + $B_2$ DI) mit positiven Koeffizienten ergibt.

# FIG.1

FIG. 2